# DEMANDE DE BREVET EUROPEEN

(11) **EP 2 575 397 A1**
(43) Date de publication de la demande: **03.04.2013**
(21) Numéro de dépôt: 11306270.7
(22) Date de dépôt: 30.09.2011
(51) Int. Cl.: H04W 48/18

(54) **Procédé de sélection d'un opérateur de radiotéléphonie mobile pour permettre à un abonné titulaire d'un abonnement principal d'entrer en situation d'itinérance**

(71) Demandeur: Gemalto SA, 92190 Meudon (FR)
(72) Inventeur: Tuilier, Edmond, 13012 MARSEILLE (FR); Kuc, Jean-François, 13112 LA DESTROUSSE (FR); Leroux, Bertrand, 92190 MEUDON (FR)

(57) **Abrégé**

L'invention concerne un procédé de sélection d'un opérateur de radiotéléphonie mobile pour permettre à un abonné titulaire d'un abonnement principal d'entrer en situation d'itinérance, cet abonné disposant d'un terminal mobile.

Selon l'invention, le procédé consiste à :
i - proposer à l'abonné titulaire de l'abonnement principal le nom d'au moins un réseau d'opérateur alternatif capable de fournir un service d'itinérance, cette proposition étant accompagnée par une indication du tarif d'itinérance appliqué par ce réseau d'opérateur alternatif ;
ii - après choix de l'utilisateur d'un réseau d'opérateur alternatif, envoyer au terminal mobile un identifiant lui permettant de se connecter au réseau d'opérateur alternatif afin de bénéficier de son tarif d'itinérance.

## Description

Le domaine de l'invention est celui des télécommunications dans des réseaux cellulaires et concerne plus précisément un procédé de sélection d'un opérateur de radiotéléphonie mobile permettant à un abonné titulaire d'un abonnement principal d'entrer en situation d'itinérance avec un autre opérateur.

Un utilisateur d'un terminal mobile (ou d'une machine tel qu'un véhicule automobile relié par un réseau d'opérateur à un centre de suivi de position de type GPS, une tablette électronique capable de se connecter en 3G à un réseau cellulaire ou même un appareil photo ou une caméra capable d'envoyer des photos sur un site Internet via un réseau 3G) souscrit - généralement dans son pays de résidence - un abonnement avec un opérateur national. Par exemple, un français a actuellement le choix de souscrire un abonnement auprès de quatre opérateurs nationaux qui sont Orange, SFR, Bouygues et La Poste. Il lui est également possible de souscrire des abonnements auprès d'opérateurs virtuels (MVNO en anglais, Mobile Virtual Network Operator) qui utilisent les infrastructures des opérateurs nationaux. Après avoir souscrit un abonnement auprès d'un de ces opérateurs, il peut communiquer grâce à son terminal mobile par le réseau de cet opérateur.

Les opérateurs, qu'ils soient principaux ou de type MVNO (Ces opérateurs seront appelés par la suite ceux gérant un abonnement dit principal), passent généralement des accords d'itinérance (roaming en anglais) avec des opérateurs étrangers (généralement au niveau mondial) pour que l'utilisateur puisse communiquer à l'extérieur de son pays d'origine. A titre d'exemple, Orange a passé des accords d'itinérance avec des opérateurs italiens pour que son abonné français puisse bénéficier des mêmes prestations de communication en Italie qu'en France. La seule différence pour l'utilisateur est que la tarification de ses communications sera plus importante lorsqu'il se trouve en Italie que s'il était en France.

A titre d'exemple, Orange a notamment passé des accords d'itinérance avec TIM, Wind et H3G qui sont trois opérateurs italiens. L'utilisateur français qui se rend en Italie connaît en principe le tarif des communications en itinérance qui lui est communiqué par Orange. Il en est de même pour d'autres pays étrangers, quelque soit le réseau visité qu'il utilise. Cela signifie que l'utilisateur paiera à Orange le même montant par unité de communication (par exemple par minute) qu'il se connecte à Tim, Wind ou H3G, par exemple 50 centimes d'Euros par minute de communication. Entre Orange et ces trois opérateurs italiens des accords tarifaires sont passés et ne sont pas tous nécessairement égaux. A titre d'exemple, TIM facturera 22 centimes d'Euros à Orange par minute de communication, Wind 25 centimes et H3G 30 centimes. L'opérateur Orange facturant 50 centimes par minute à l'utilisateur, sa marge est plus importante si l'utilisateur se connecte au réseau TIM, un peu moins importante s'il se connecte au réseau Wind et la plus faible si l'utilisateur se connecte au réseau H3G. L'opérateur de l'abonnement principal (Orange) a donc tout intérêt à ce que son abonné se connecte en situation d'itinérance au réseau TIM. Celui-ci figurera donc en tant que réseau d'itinérance préféré dans un fichier appelé PLMN résidant dans la carte SIM de l'abonné. Le fichier PLMN peut être mis à jour via OTA par l'opérateur principal (en l'occurrence Orange).

Le principal inconvénient de cette solution existante est que l'utilisateur paie en situation d'itinérance toujours le même montant tarifaire à son opérateur principal et il est lié à cet opérateur principal par contrat. Or, il est possible qu'un autre opérateur, par la suite appelé opérateur alternatif, ait passé de meilleurs accords d'itinérance avec les opérateurs italiens et qu'il facture ainsi moins chère la minute de communication en situation d'itinérance. Or, comme l'utilisateur n'a pas signé d'abonnement avec cet opérateur alternatif (par exemple SFR, Bouygues ou La Poste, voire un opérateur étranger (allemand, belge, espagnol)), il ne lui est pas possible de bénéficier de ces tarifs d'itinérance plus favorables.

La commission européenne a récemment émis une proposition visant à diminuer les tarifs d'itinérance (voir le site : http://www.euractiv.com/en/infosociety/eu-wants-mobile-roaming-surcharges-2014-news-506229)

La présente invention a notamment pour objectif d'apporter une solution à ces surcoûts d'itinérance et plus précisément un des objectifs de l'invention est de permettre à un abonné d'un opérateur principal de pouvoir bénéficier de tarifs d'itinérance plus avantageux que ceux qui lui sont appliqués par son opérateur principal, sans pour autant qu'il n'ait à changer d'opérateur principal (souscrire un abonnement chez SFR et se désabonner d'Orange dans l'exemple ci-dessus).

Cet objectif, ainsi que d'autres qui apparaîtront par la suite, est atteint grâce à un procédé de sélection d'un opérateur de radiotéléphonie mobile pour permettre à un abonné titulaire d'un abonnement principal d'entrer en situation d'itinérance, l'abonné disposant d'un terminal mobile, le procédé consistant à :
i - proposer à l'abonné titulaire de l'abonnement principal le nom d'au moins un réseau d'opérateur alternatif capable de fournir un service d'itinérance, cette proposition étant accompagnée par une indication du tarif d'itinérance appliqué par ce réseau d'opérateur alternatif ;
ii - après choix de l'utilisateur d'un réseau d'opérateur alternatif, envoyer au terminal mobile un identifiant lui permettant de se connecter au réseau d'opérateur alternatif afin de bénéficier de son tarif d'itinérance.

Avantageusement, l'étape -i- est précédée d'une étape de détection que le terminal mobile de l'utilisateur est en situation d'itinérance.

Préférentiellement, l'identifiant est un IMSI.

Dans une version alternative, l'identifiant est un IMSI et une clé Ki.

Avantageusement, l'identifiant est remplacé par l'IMSI et la clé Ki de l'opérateur gérant l'abonnement principal lorsque celui-ci n'est plus en situation d'itinérance.

L'identifiant est préférentiellement transmis par le fournisseur de service de l'abonnement principal.

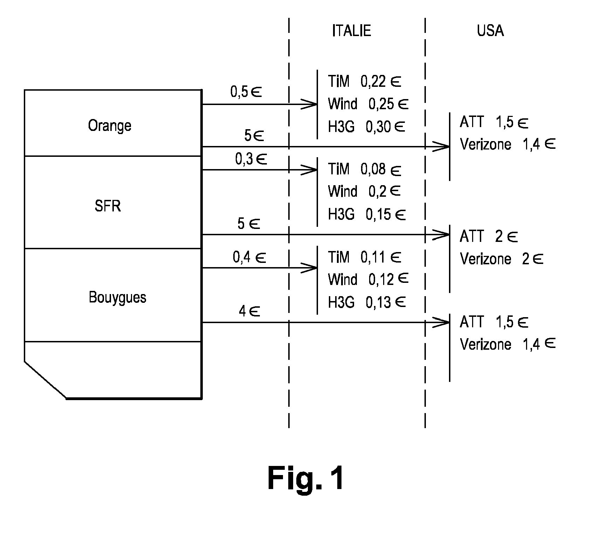

D'autres caractéristiques et avantages de l'invention apparaîtront à la lecture de la description suivante d'un mode de mise en oeuvre de l'invention, donné à titre illustratif et non limitatif, et de la figure unique annexée montrant le fonctionnement de la présente invention.

On se place ici dans le cadre d'un abonné ayant un abonnement principal chez Orange. Il utilise donc le réseau d'Orange lorsqu'il est en France pour ses communications cellulaires.

Supposons que cet abonné souhaite se rendre en Italie pour un voyage d'affaires ou pour y passer ses vacances. Il sait que contractuellement Orange lui facturera 0,5 Euros par minute de communication (voix, données,...), quel que soit le réseau italien qu'il utilisera (ici TIM, Wind ou H3G).

L'invention consiste en une applet (application logicielle) installée dans le terminal de l'utilisateur, préférentiellement dans sa carte SIM ou UICC d'Orange (ou dans un eUICC s'il s'agit d'une fonctionnalité SIM ou UICC soudée de manière définitive dans une machine nomade) permettant à l'utilisateur de sélectionner un réseau d'opérateur alternatif, autre qu'Orange, capable de fournir un service d'itinérance plus intéressant financièrement
lorsqu'il se rend en Italie.

Pour ce faire, deux modes de mise en oeuvre sont possibles :
Dans un premier mode de mise en oeuvre de l'invention, l'utilisateur accède à une fonctionnalité de son terminal mobile lui permettant de connaître le tarif d'itinérance qui lui sera appliqué s'il se rend en Italie. L'opérateur principal lui transmet alors le nom d'au moins un réseau d'opérateur alternatif capable de lui fournir ce service itinérance en Italie. À titre d'exemple, en référence à la figure unique, l'utilisateur a le choix entre son opérateur principal Orange, SFR et Bouygues. À chaque opérateur est associé à tarif d'itinérance. Par exemple Orange facturera 0,5 Euros par minute de communication SFR 0,3 Euros et Bouygues 0,4 Euros. Ces tarifs ne dépendent pas du réseau auquel le terminal de l'utilisateur ira s'attacher en Italie. Orange facturera 0,5 euros à l'utilisateur et reversera 0,22 euros à TIM si ce réseau est utilisé, 0,25 euros à Wind et 0,3 euros à H3G à partir du moment l'utilisateur choisit Orange comme son réseau principal.

Le tarif d'itinérance pour SFR est le plus bas : 0,3 euros par minute de communication, SFR ayant négocié des tarifs inférieurs avec Tim (0,08 Euros), Wind (0,2 Euros) et H3G (0,15 Euros). Le tarif d'itinérance proposée par Bouygues est quant à lui intermédiaire (0,4 Euros), celui-ci ayant négocié des tarifs de 0,11 euros, 0,12 Euros et 0,13 euros respectivement pour TIM, Wind et H3G.

L'utilisateur a donc intérêt à choisir, pour des raisons de coût, comme opérateur alternatif, l'opérateur SFR.

Cette sélection peut être réalisée manuellement en utilisant l'interface homme machine du terminal.

Si l'utilisateur décide de se rendre aux États-Unis, Orange et SFR lui proposent un tarif d'itinérance de cinq euros par minute, alors que Bouygues un tarif inférieur (quatre Euros). L'utilisateur désirant se rendre aux États-Unis aura donc intérêt à choisir Bouygues comme opérateur alternatif.

La liste des opérateurs alternatifs peut-être téléchargée via OTA dans la carte SIM, l'UICC ou l'eUICC du terminal, soit automatiquement à chaque mise à jour tarifaire, soit à la demande de l'utilisateur.

Dans un second mode de mise en oeuvre de l'invention, lorsqu'une situation d'itinérance est détectée par le terminal, c'est-à-dire lorsque l'utilisateur traverse la frontière franco-italienne ou arrive aux États-Unis, l'application lui propose automatiquement le choix entre les opérateurs alternatifs disponibles.

Dans ces deux modes de mise en oeuvre, l'utilisateur choisit l'opérateur alternatif lui proposant le meilleur tarif d'itinérance. Son opérateur principal (Orange) transmet alors au terminal de l'utilisateur un identifiant (avec les mesures de sécurité adéquates) lui permettant de se connecter au réseau d'opérateur alternatif choisi afin que cet utilisateur bénéficie du tarif d'itinérance le plus approprié. Cet identifiant est typiquement un IMSI permettant au terminal de s'authentifier sur le réseau de l'opérateur alternatif par l'intermédiaire du réseau visité (TIM, Wind, H3G pour l'Italie et ATT ou Verizone pour les États-Unis).

Bien entendu, afin que cette authentification soit complète, il est nécessaire que la clé Ki soit partagée entre l'opérateur principal et les opérateurs alternatifs. Si un tel accord de partage de clé Ki n'existe pas entre les opérateurs, l'identifiant transmis au terminal comprend non seulement l'IMSI mais également une clé Ki.

Avantageusement, l'identifiant utilisé pour se connecter au réseau d'opérateur alternatif est remplacé par l'IMSI et la clé Ki de l'opérateur gérant l'abonnement principal lorsque celui-ci n'est plus en situation d'itinérance, c'est-à-dire dans l'exemple précédent, lorsqu'il revient sur le sol français.

Le ou les opérateurs alternatifs proposés à l'utilisateur ne sont pas nécessairement des opérateurs de la même nationalité que l'opérateur principal. Ainsi, Orange pourrait proposer Telefonica (Espagne) comme opérateur alternatif si celui-ci passe un accord avec Orange (et surtout si Telefonica propose des tarifs d'itinérance en Italie (ou dans d'autres pays) plus intéressants que les opérateurs alternatifs nationaux).

L'indication du tarif d'itinérance appliqué par le réseau d'opérateur alternatif peut être présentée à l'utilisateur sous différentes formes : soit une indication du tarif effectif qui sera appliqué par l'opérateur alternatif, soit un classement des opérateurs alternatifs (y compris dans les deux cas éventuellement de l'opérateur principal), en fonction du tarif d'itinérance (l'opérateur le moins cher apparaissant en tête de liste du classement proposé à l'utilisateur.

## Revendications

1. Procédé de sélection d'un opérateur de radiotéléphonie mobile pour permettre à un abonné titulaire d'un abonnement principal d'entrer en situation d'itinérance, ledit abonné disposant d'un terminal mobile, ledit procédé consistant à :
i - proposer audit abonné titulaire dudit abonnement principal le nom d'au moins un réseau d'opérateur alternatif capable de fournir un service d'itinérance, ladite proposition étant accompagnée par une indication du tarif d'itinérance appliqué par ce réseau d'opérateur alternatif ;
ii - après choix dudit utilisateur d'un réseau d'opérateur alternatif, envoyer audit terminal mobile un identifiant lui permettant de se connecter audit réseau d'opérateur alternatif afin de bénéficier de son tarif d'itinérance.

2. Procédé selon la revendication 1, **caractérisé en ce que** l'étape -i- est précédée d'une étape de détection que le terminal mobile dudit utilisateur est en situation d'itinérance.

3. Procédé selon l'une des revendications 1 et 2, **caractérisé en ce que** ledit identifiant est un IMSI.

4. Procédé selon l'une des revendications 1 à 3, **caractérisé en ce que** ledit identifiant est un IMSI et une clé Ki.

5. Procédé selon l'une des revendications 1 à 4, **caractérisé en ce que** ledit identifiant est remplacé par l'IMSI et la clé Ki de l'opérateur gérant ledit abonnement principal lorsque celui-ci n'est plus en situation d'itinérance.

6. Procédé selon l'une des revendications 1 à 5, **caractérisé en ce que** ledit identifiant est transmis par le fournisseur de service dudit abonnement principal.
